# EUROPEAN PATENT APPLICATION

(11) **EP 3 923 524 A1**
(43) Date of publication of application: **15.12.2021**
(21) Application number: 20179086.2
(22) Date of filing: 09.06.2020
(51) Int. Cl.: H04L 12/58, H04W 40/02

(54) **SELECTING A COMMUNICATION CHANNEL FOR OMNICHANNEL MESSAGE DELIVERY**

(71) Applicant: MessageBird BidCo B.V., 1079 TX Amsterdam (NL)
(72) Inventor: Vis, Robert Daniel, 1079 TX Amsterdam (NL); Van Ommen, Joey Charles, 1079 TX Amsterdam (NL); Feiner, Rene Daniel, 1079 TX Amsterdam (NL); Cochrane Dodds, Richard David, 1079 TX Amsterdam (NL)
(74) Representative: De Vries & Metman

(57) **Abstract**

A system (1) is configured to receive (107) a request from a further system (33) to deliver message content, e.g. a one-time password, to a device (21) which is configured to receive calls and/or data addressed to a mobile phone number, determine the mobile phone number based on the request, obtain data associated with the mobile phone number, select (110), based on the data, a communication channel (36) for delivering the message content to the device, and transmit a message comprising the message content to the device (21) over the selected communication channel. The communication channel is selected from a plurality of communication channels.

## Description

### FIELD OF THE INVENTION

The invention relates to a system for transmitting a message, e.g. comprising a one-time password.

The invention further relates to a method of transmitting a message, e.g. comprising a one-time password.

The invention also relates to a computer program product enabling a computer system to perform such a method.

### BACKGROUND OF THE INVENTION

In order to provide more secure access to web sites and (other) services, more and more web sites and (other) services, e.g. Amazon and Google Nest, require two-factor authentication (2FA). After a user provides a user ID (e.g. username or e-mail address) and matching password, the web site or (other) service transmits a text/SMS message or e-mail to the e-mail address or phone number that is associated with the user ID in the web site's or service's user account database. The text/SMS message or e-mail comprises a one-time password, which the user then enters on the web site (e.g. amazon.com) to access the protected part of the web site or in an application (e.g. the Nest app) to access the service.

It is a drawback of conventional systems that the communication channel (e.g. text/SMS message or e-mail) used by the web site or (other) service to deliver the one-time password or to deliver another important and/or urgent message may not always be the best channel to reach the users. For example, a user may be connected to the Internet via Wi-Fi instead of via a mobile telecommunication network and may not be able to receive the message via text/SMS message at that moment.

### SUMMARY OF THE INVENTION

It is a first object of the invention to provide a system which can be used to deliver an important and/or urgent message (more) effectively.

It is a second object of the invention to provide a method which can be used to deliver an important and/or urgent message (more) effectively.

In a first aspect of the invention, a system for transmitting a message comprises at least one input interface, at least one output interface, and at least one processor configured to receive, via said at least one input interface, a request from a further system to deliver message content to a device which is configured to receive calls and/or data addressed to a mobile phone number, determine said mobile phone number based on said request, obtain data associated with said mobile phone number, select, based on said data, a communication channel for delivering said message content to said device, said communication channel being selected from a plurality of communication channels and transmit a message comprising said message content to said device over said selected communication channel via said at least one output interface.

Said message content transmitted by said at least one processor may be created by said at least one processor or may be created by said further system, for example. In the latter case, the message content may be included in the request received from the further system. The message content may be a one-time password, which can only be used for a limited time, or another other important and/or urgent message.

By letting the system that performs omnichannel communication with users dynamically select a communication channel for delivering a message from a plurality of communication channels and by letting this system select the communication channel based on data associated with the mobile phone number, it is possible to select and use the communication channel that is most likely the most effective channel to deliver the urgent and/or important message to the user in question. Various inputs related to the mobile phone number may be used and additionally, inputs related to the communication channels but not related to specific mobile phone number may be used.

Said at least one processor may be configured to determine whether said transmission of said message to said device over said selected communication channel was unsuccessful, select, based on said data associated with said mobile phone number, in dependence on said transmission being unsuccessful, a further communication channel for delivering said message content or further message content to said device, said further communication channel being selected from said plurality of communication channels and being different from said communication channel, and transmit said message content or said further message content to said device over said selected further communication channel via said at least one output interface in dependence on said transmission being unsuccessful. If the (first) transmission of the message content, e.g. one-time password, was not successful, it is often beneficial to try another (secondary/fallback) communication channel (preferably with further message content). However, in certain cases, it may be beneficial to (first) try to send the message content or the further message content over the same communication channel again, e.g. if the difference between a user-provided one-time password and the transmitted one-time password was only minor, e.g. differed in one symbol.

Said data may describe results of previous transmissions of messages to said device and/or to another device which was configured to receive calls and/or data addressed to said mobile phone number. Examples are described in the next paragraphs.

Said at least one processor may be configured to determine whether said transmission of said message to said device over said selected communication channel was successful and register in a memory as part of said data that said transmission was successful upon determining that said transmission was successful. By selecting a communication channel that was in the past used successfully to deliver messages, a communication channel is selected that is most likely an effective channel to deliver the message content. Alternatively, a communication channel may be selected that did not fail to deliver a message in the past, but if this communication channel has not yet been used successfully to deliver a message, then it is not certain how effective this communication channel will be.

Said transmitted message content may comprise a transmitted one-time password and said at least one processor may be configured to receive, via said at least one input interface, a user-provided password from said further system, determine whether said user-provided password matches said transmitted one-time password, and upon determining that said user-provided password matches said transmitted one-time password, register in said memory as part of said data that said transmission was successful and inform said further system and/or another system that said user-provided password matches said transmitted one-time password. Another system than the further system may be informed if the further system is a user device, for example.

Said transmitted message content may comprise a transmitted one-time password and said at least one processor may be configured to receive, via said at least one input interface, a confirmation from said further system, said confirmation indicating that a user-provided password matches said transmitted one-time password, and register in said memory as part of said data that said transmission was successful upon receiving said confirmation.

Said at least one processor may be configured to transmit said message via a phone call and determine that said transmission was unsuccessful upon determining that said phone call was not answered within a predetermined period. What the best value of the predetermined period is may be learned from previous attempts to deliver messages via a phone call.

Said at least one processor may be configured to receive, via said at least one input interface, a delivery report related to said message from a server associated with said selected communication channel and determine whether said transmission was unsuccessful based on said delivery report. For example, although a successful delivery of a one-time password may not necessarily lead to the user providing the delivered one-time password, an unsuccessful delivery of the one-time password generally means that the user is not able to enter the correct one-time password.

Said transmitted message content may comprise a transmitted one-time password and said at least one processor may be configured to register in said memory as part of said data that said transmission was unsuccessful upon determining that a difference between a user-provided password and said transmitted one-time password exceeds a threshold. The threshold may be a mistake in a single symbol, for example.

Said transmitted message content may comprise a transmitted one-time password and said at least one processor may be configured to receive, via said at least one input interface, information from said further system which informs said system that a user has provided a password which does not match said transmitted one-time password or has indicated not having received said transmitted one-time password, and register in said memory as part of said data that said transmission was unsuccessful upon receiving said information. This is beneficial if it is the further system that creates the one-time password and checks itself whether the entered password is correct. By having the further system inform the system, the system is able to improve its data even if/when it does not create the one-time password itself.

Said at least one processor may be configured to determine a country associated with said mobile phone number, select said communication channel or another communication channel for delivering said message content to said device based on a penetration of said plurality of communication channels in said country, and transmit said message comprising said message content to said device over said selected communication channel or over said another communication channel via said at least one output interface. Data that does not describe results of previous transmissions of messages, like the penetration of the communication channels in the country associated with the mobile phone number, may be used when no previous messages have been previously transmitted to the device (or to another device which was configured to receive calls and/or data addressed to the mobile phone number) or may be used in addition to data that describes results of previous transmissions of messages.

Said at least one processor may be configured to transmit said message via a phone call and register in said memory as part of said data whether said phone call was answered. Said at least one processor may be configured to receive, via said at least one input interface, a delivery report related to said message from a server associated with said selected communication channel and register said delivery report or information from said delivery report in said memory as part of said data. This improves the data and makes it more likely that the selected communication channel is indeed the most effective channel to deliver the important and/or urgent message content to the user in question

A non-transitory computer-readable storage medium stores at least a first software code portion, the first software code portion, when executed or processed by a computer, being configured to perform executable operations for transmitting a message.

The executable operations comprise receiving a request from a further system to deliver message content to a device which is configured to receive calls and/or data addressed to a mobile phone number, determining said mobile phone number based on said request, obtaining data associated with said mobile phone number, selecting, based on said data, a communication channel for delivering said message content to said device, said communication channel being selected from a plurality of communication channels, and transmitting a message comprising said message content to said device over said selected communication channel.

As will be appreciated by one skilled in the art, aspects of the present invention may be embodied as a device, a method or a computer program product. Accordingly, aspects of the present invention may take the form of an entirely hardware embodiment, an entirely software embodiment (including firmware, resident software, microcode, etc.) or an embodiment combining software and hardware aspects that may all generally be referred to herein as a "circuit", "module" or "system." Functions described in this disclosure may be implemented as an algorithm executed by a processor/microprocessor of a computer. Furthermore, aspects of the present invention may take the form of a computer program product embodied in one or more computer readable medium(s) having computer readable program code embodied, e.g., stored, thereon.

Any combination of one or more computer readable medium(s) may be utilized. The computer readable medium may be a computer readable signal medium or a computer readable storage medium. A computer readable storage medium may be, for example, but not limited to, an electronic, magnetic, optical, electromagnetic, infrared, or semiconductor system, apparatus, or device, or any suitable combination of the foregoing. More specific examples of a computer readable storage medium may include, but are not limited to, the following: an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing. In the context of the present invention, a computer readable storage medium may be any tangible medium that can contain, or store, a program for use by or in connection with an instruction execution system, apparatus, or device.

A computer readable signal medium may include a propagated data signal with computer readable program code embodied therein, for example, in baseband or as part of a carrier wave. Such a propagated signal may take any of a variety of forms, including, but not limited to, electro-magnetic, optical, or any suitable combination thereof. A computer readable signal medium may be any computer readable medium that is not a computer readable storage medium and that can communicate, propagate, or transport a program for use by or in connection with an instruction execution system, apparatus, or device.

Program code embodied on a computer readable medium may be transmitted using any appropriate medium, including but not limited to wireless, wireline, optical fiber, cable, RF, etc., or any suitable combination of the foregoing. Computer program code for carrying out operations for aspects of the present invention may be written in any combination of one or more programming languages, including an object oriented programming language such as Java(TM), Smalltalk, C++ or the like and conventional procedural programming languages, such as the "C" programming language or similar programming languages. The program code may execute entirely on the user's computer, partly on the user's computer, as a stand-alone software package, partly on the user's computer and partly on a remote computer, or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider).

Aspects of the present invention are described below with reference to flowchart illustrations and/or block diagrams of methods, apparatus (systems), and computer program products according to embodiments of the present invention. It will be understood that each block of the flowchart illustrations and/or block diagrams, and combinations of blocks in the flowchart illustrations and/or block diagrams, can be implemented by computer program instructions. These computer program instructions may be provided to a processor, in particular a microprocessor or a central processing unit (CPU), of a general purpose computer, special purpose computer, or other programmable data processing apparatus to produce a machine, such that the instructions, which execute via the processor of the computer, other programmable data processing apparatus, or other devices create means for implementing the functions/acts specified in the flowchart and/or block diagram block or blocks.

These computer program instructions may also be stored in a computer readable medium that can direct a computer, other programmable data processing apparatus, or other devices to function in a particular manner, such that the instructions stored in the computer readable medium produce an article of manufacture including instructions which implement the function/act specified in the flowchart and/or block diagram block or blocks.

The computer program instructions may also be loaded onto a computer, other programmable data processing apparatus, or other devices to cause a series of operational steps to be performed on the computer, other programmable apparatus or other devices to produce a computer implemented process such that the instructions which execute on the computer or other programmable apparatus provide processes for implementing the functions/acts specified in the flowchart and/or block diagram block or blocks.

The flowchart and block diagrams in the figures illustrate the architecture, functionality, and operation of possible implementations of devices, methods and computer program products according to various embodiments of the present invention. In this regard, each block in the flowchart or block diagrams may represent a module, segment, or portion of code, which comprises one or more executable instructions for implementing the specified logical function(s). It should also be noted that, in some alternative implementations, the functions noted in the blocks may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustrations, and combinations of blocks in the block diagrams and/or flowchart illustrations, can be implemented by special purpose hardware-based systems that perform the specified functions or acts, or combinations of special purpose hardware and computer instructions.

### BRIEF DESCRIPTION OF THE DRAWINGS

These and other aspects of the invention are apparent from and will be further elucidated, by way of example, with reference to the drawings, in which:
Fig. 1 is a block diagram of an embodiment of the system;
Figs. 2-8 show examples of the Internet communication system 1 of Fig. 1 transmitting a message comprising one-time password to the mobile phone of Fig. 1;
Fig. 9 is a flow diagram of a first embodiment of the method of transmitting a message;
Fig. 10 is a block diagram of an exemplary data processing system for performing the method of the invention; and
Fig. 11 is a flow diagram of a second embodiment of the method of transmitting a message.

Corresponding elements in the drawings are denoted by the same reference numeral.

### DETAILED DESCRIPTION OF THE EMBODIMENTS

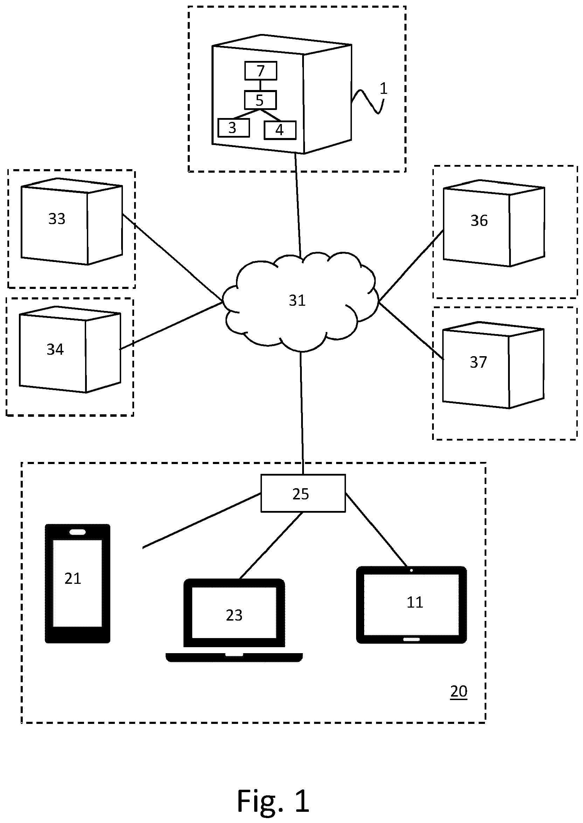

Fig. 1 shows an embodiment of a system for transmitting a message: Internet communication system, which is used by a communication integrator like MessageBird. Users normally do not visit a web site of a communication integrator or use an application of the communication integrator. Instead, users visit the web sites of brands and use applications that communicate with servers of brands. Fig. 1 shows servers 33 and 34 which host one or more web sites and/or one or more services of brands A and B, respectively. Brands A and B may be retailers or digital service providers, for example.

The servers 33 and 34 use communication platform/channel servers 36 and 37 to provide one-time passwords and/or other messages to its users. The servers 33, 34, 36, and/or 37 may be located in the cloud, for example. A different communication platform/channel corresponds to a different communication channel. The communication channels may include VoIP, WebRTC, PSTN , SMS, WhatsApp, WeChat, Signal, Facebook Messenger, Telegram, Line and Viber, and e-mail, for example. For instance, the communication platform/channel server 36 may be a WhatsApp server and the message sent via this platform/channel a WhatsApp message.

The communication platform/channel servers 36 and 37 may comprise one or more of a mail server, a Facebook Messenger server, a WhatsApp server, a Signal server, a WeChat server, a Line server, a Telegram server, a Viber server, a VoIP gateway, a WebRTC gateway, a PSTN gateway, and an SMS gateway, for example. The communication platform/channel servers 36 and 37 are used to transmit and receive messages with text, voice and/or video content.

In the example of Fig. 1, a first user has a home network 20 comprising an Internet access point 25. The user uses a tablet 11, a mobile phone 21 and a laptop 23 to communicate with devices on the Internet via the Internet access point 25. The Internet access point 25, brand servers 33 and 34, the Internet communication system 1 and communication platform/channel servers 36 and 37 are all connected to the Internet (backbone) 31.

The Internet communication system 1 comprises a receiver 3, a transmitter 4, a processor 5, and memory 7. The processor 5 is configured to receive, via the receiver 3, a request from a further system, e.g. laptop 23, server 33, or server 34, to deliver message content to mobile phone 21, which is configured to receive calls and/or data addressed to a mobile phone number, determine the mobile phone number based on the request, and obtain data associated with the mobile phone number. Part or all of the data may be obtained from memory 7, for example.

The processor 5 is further configured to select, based on the data, a communication channel for delivering the message content to the mobile phone 21 and transmit a message comprising the message content to the mobile phone 21 over the selected communication channel via the transmitter 4. The communication channel is selected from a plurality of communication channels.

In the embodiment of the Internet communication system 1 shown in Fig. 1, the Internet communication system 1 comprises one processor 5. In an alternative embodiment, the Internet communication system 1 comprises multiple processors. The processor 5 of the Internet communication system 1 may be a general-purpose processor, e.g. from Intel or AMD, or an application-specific processor. The processor 5 of the Internet communication system 1 may run a Windows or Unix-based operating system for example. The memory 7 may comprise one or more memory units. The memory 7 may comprise one or more hard disks and/or solid-state memory, for example. The memory 7 may be used to store an operating system, applications and application data, for example.

The receiver 3 and the transmitter 4 may use one or more wired and/or wireless communication technologies such as Ethernet or Wi-Fi (IEEE 802.11) to communicate with an Internet access point (not shown), for example. In an alternative embodiment, multiple receivers and/or multiple transmitters are used instead of a single receiver and a single transmitter. In the embodiment shown in Fig. 1, a separate receiver and a separate transmitter are used. In an alternative embodiment, the receiver 3 and the transmitter 4 are combined into a transceiver. The Internet communication system 1 may comprise other components typical for a computer such as a power connector. The invention may be implemented using a computer program running on one or more processors.

In the embodiment of the system shown in Fig. 1, the system comprises a single device. In an alternative embodiment, the system comprises multiple devices. The Internet communication system 1 may be located in the cloud, for example.

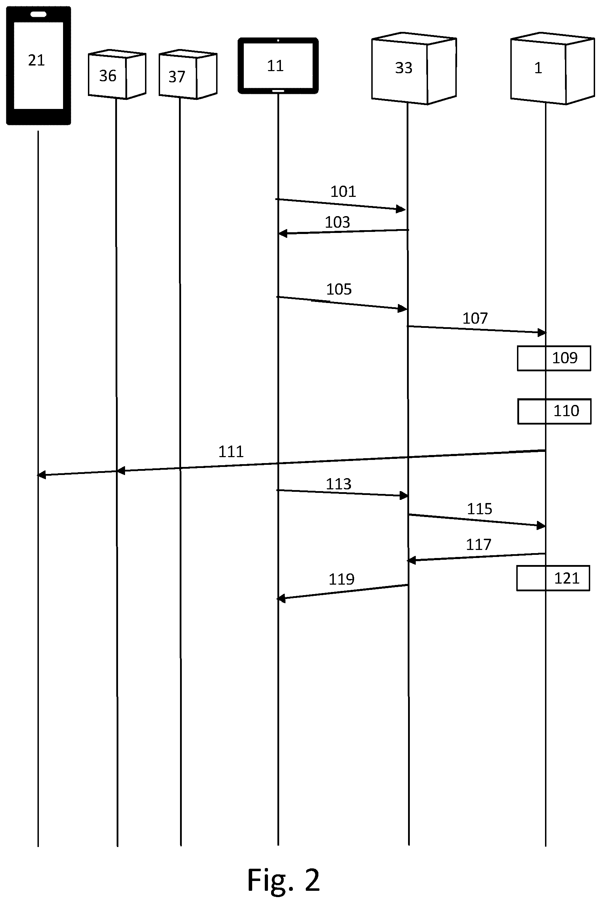

Figs. 2-8 show examples of the Internet communication system 1 of Fig. 1 transmitting a message to the mobile phone of Fig. 1. In these examples, the message comprises a one-time password. Alternatively, the message may comprise a different message content.

A first example of the Internet communication system 1 of Fig. 1 transmitting a one-time password is shown in Fig. 2. In this first example, the user visits a web site of brand A hosted on the server 33. In step 101, the tablet 11 requests an HTML page with the login page of the web site from server 33, e.g. the home page of the web site. In response, the server 33 then transmits the requested HTML in step 103. The login page requests that the user enters a username and password. In step 105, the user enters his username and password on tablet 11 and the tablet 11 sends it to the server 33, e.g. in an HTML POST request. Alternatively, steps 101 and 103 may be omitted when the user starts an application rather than visits a web site. The application may present a login screen after the user starts the application and the application may transmit a user-provided username and password in step 105, e.g. by using an API of the corresponding service on server 33.

In step 107, the server 33 transmits a request to the Internet communication system 1 to create a one-time password and deliver this password to a specified mobile phone number. The request may be transmitted using an API of the Internet communication system 1. In step 109, the Internet communication system 1 creates the one-time password. In an alternative embodiment, the one-time password is not created by the Internet communication system 1, but by the further system. In this alternative embodiment, the one-time password may be included in the request transmitted in step 107.

In step 110, the Internet communication system 1 selects the communication channel to be used for delivering the one-time password to the mobile device which uses the specified mobile phone number based at least on data associated with the mobile phone number. In the example of Fig. 2, the communication channel is selected based on which communication channel(s) was/were in the past used successfully with the specified mobile number and optionally based on which communication channel(s) was/were in the past used unsuccessfully with the specified mobile number.

This information may be obtained from a database. The database or a part thereof may be stored on the Internet communication system 1 itself and/or the database or a part therefore may be stored on the server 33. If such information is not available yet, the country corresponding to the specified mobile number may be determined and a communication channel with a high penetration in this country may be selected. The brand corresponding to the server that transmitted the request may also specify which one or more communication channels should not be used. This may be specified in the request transmitted by the server 33 in step 107, for example. In step 110, the communication channel may be selected based on one or more inputs of the following list (which is not exhaustive), such as:
- Geo-based data:
   ▪ Market penetration of channels (+availability)
   ▪Time of day
   ▪ Regulatory compliance
- Availability data:
   ▪ HLR/Lookup
   ▪ The number is not on the specified channel
   ▪ The Number is roaming
   ▪ The number has no internet connection
   ▪ The number is not on the carrier network
   ▪ The number doesn't exist
   ▪ The number is or is not tied to an account for the specified channel
   ▪ Voice call was denied / voicemail
   ▪ Voice call was not picked up
   ▪ Voice call was taking too long to be picked up
   ▪ Quality of voice call was not good enough
   ▪ Channel has no quota to check number
   ▪ Channel has no quota to send message
   ▪ The identifier does not exist (number, e-mail id)
- Historic user-specific data:
   ▪ Channel has converted for end-recipient before
   ▪ Channel has been chosen by end-recipient as the primary channel
   ▪ End-recipient has been online recently on this channel
   ▪ End recipient has quick read-receipt (reads messages quickly on this channel)
- Other data:
   ▪ TTL of one-time password has expired on the primary channel, fallback to the secondary channel
   ▪ DLRs of SMS
   ▪ Time-based
   ▪ Customer specified

In step 111, the one-time password created in step 109 is transmitted to the mobile phone 21 via the communication channel/platform selected in step 110. The one-time password is included in a message that has the specified mobile phone number as destination. This message is transmitted by the Internet communication system 1 to the communication platform/channel server 36, which then forwards it to the mobile phone 21.

After the one-time password is displayed on the mobile phone 21, the user enters it on tablet 11 and the tablet 11 sends the entered one-time password to the server 33, e.g. in an HTML POST request or by using the service API on the server 33, in step 113. In step 115, the server 33 verifies the one-time password with the Internet communication system 1, e.g. via an API of the Internet communication system 1. The message transmitted in step 115 comprises the one-time password entered in step 113 and the mobile phone number.

In the example of Fig. 2, the user has entered the correct one-time password and the Internet communication system 1 confirms in step 115 to the server 33 that the entered one-time password is correct. In step 119, the server 33 grants access to the protected part of the web site. In step 121, the Internet communication system 1 registers in the afore-mentioned database that the communication channel used in step 111 was used successfully with the specified mobile phone number.

In the example of Fig. 2, the user needs to enter a password. Alternatively, the message transmitted in step 111 may comprise a button and when the user presses this button, the one-time password received in step 111 is provided automatically to the server 33. This may be possible, for example, if the mobile phone 21 is used to visit the website or run the application. Not all communication channels may support this functionality. Both an entered password and an automatically provided password are referred to as "user-provided password".

In the example of Fig. 2, the user-provided password is provided to the server 33 in step 113. Alternatively, the user-provided password may be provided directly to the Internet communication system 1 instead of to the server 33. For example, the page visited in step 101 may comprise a widget of the Internet communication system 1, e.g. in an Iframe, and it is this widget that transmits the one-time password entered on the tablet 11 to the Internet communication system 1 in step 113. In this case, the Internet communication system 1 still confirms to the server 33 that the entered one-time password is correct (in step 115) and not (just) to the tablet 11.

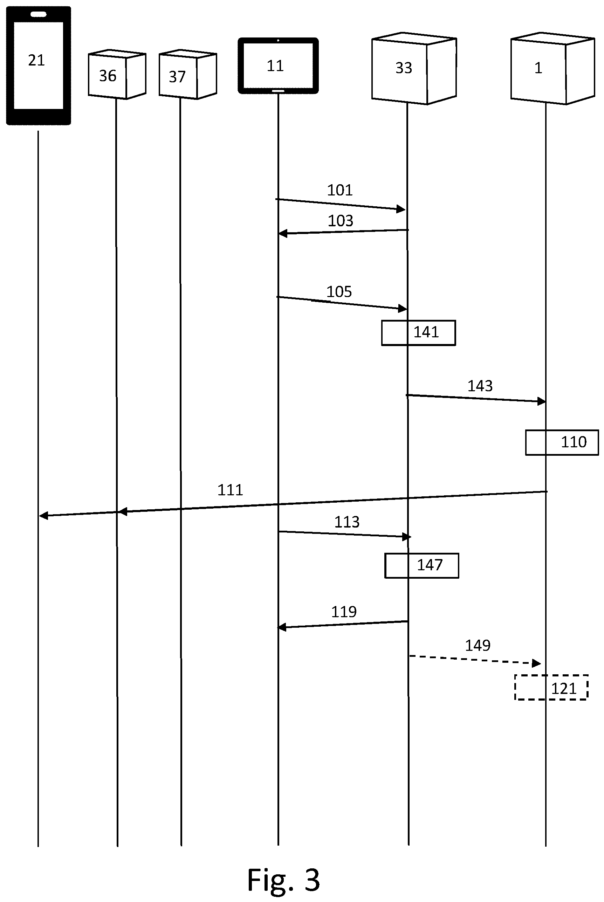

A second example of the Internet communication system 1 of Fig. 1 transmitting a one-time password is shown in Fig. 3. In this second example, steps 101 to 105 are performed in the manner described in relation to Fig. 2. After the user has entered his username and password in step 105, the server 33 creates a one-time password in step 141. In step 143, the server 33 transmits a request to the Internet communication system 1 to deliver the one-time password created in step 141 to a specified mobile phone number. The request comprises the one-time password and the mobile phone number.

In step 110, the Internet communication system 1 selects the communication channel to be used for delivering the one-time password to the mobile device which uses the specified mobile phone number, in the manner described in relation to Fig. 2. In the example of Fig. 3, the Internet communication system 1 does not perform step 109 of Fig. 2, as the one-time password has already been provided by the server 33. After step 110, steps 111 and 113 are performed in the manner described in relation to Fig. 2.

In step 147, the server 33 checks whether the one-time password matches the one-time password created in step 141. In the example of Fig. 3, the user has entered the correct one-time password and the server 33 grants access to the protected part of the web site. Optionally, the server 33 also informs. in step 149, the Internet communication system 1 with a confirmation message that the correct one-time password has been entered. This confirmation message specifies the mobile phone number to which the one-time password was provided in step 111. The Internet communication system 1 then registers in the afore-mentioned database that the communication channel used in step 111 was used successfully with the specified mobile phone number.

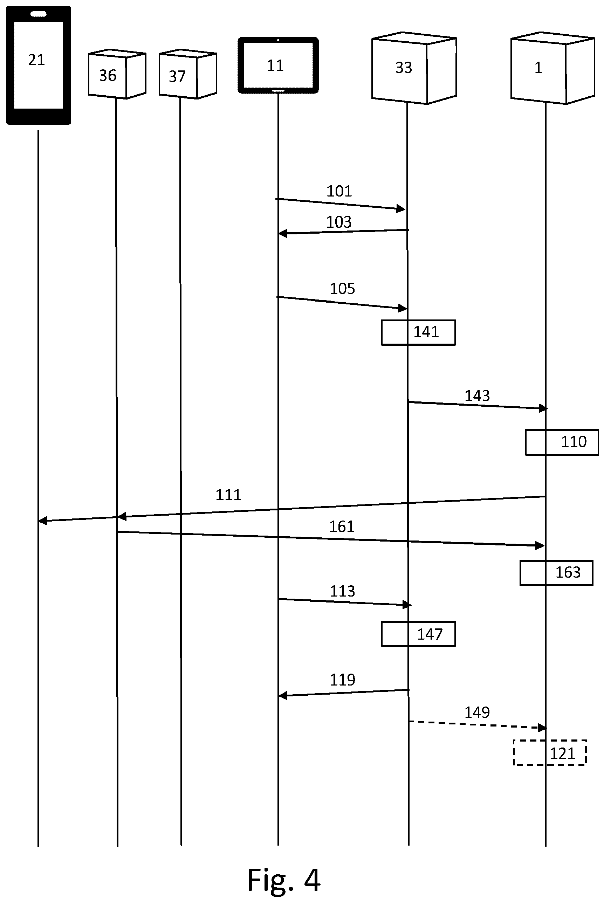

A third example of the Internet communication system 1 of Fig. 1 transmitting a one-time password is shown in Fig. 4. In this third example, steps 101 to 105, steps 141 and 143, and steps 110 and 111 are performed in the manner described in relation to Figs. 2 and 3. In this third example, the mobile communication platform/channel server 36 transmits, in step 161, a message to the Internet communication system 1 informing the Internet communication system 1 that the message transmitted in step 111 was delivered successfully. The Internet communication system 1 performs step 163 after receiving this message. In step 163, the Internet communication system 1 registers the successful delivery in the afore-mentioned database. This is especially beneficial when the server 33 does not perform step 149. Steps 113, 147, and 119 and optional steps 149 and 121 are performed in the manner described in relation to Figs. 2 and 3.

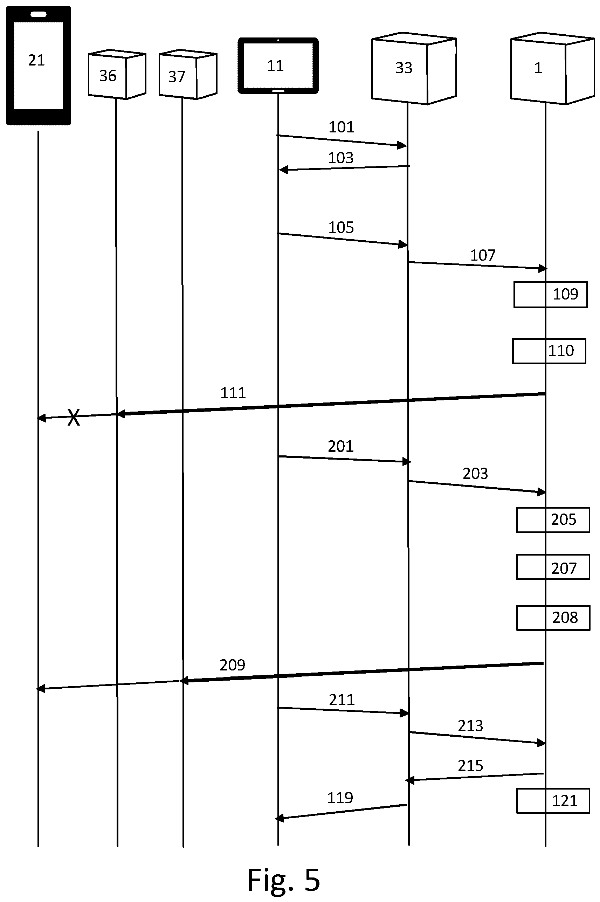

A fourth example of the Internet communication system 1 of Fig. 1 transmitting a one-time password is shown in Fig. 5. This fourth example is an extension of the first example of Fig. 2. In this fourth example, steps 101 to 111 are performed in the way described in relation to Fig. 2. However, in this example, the one-time password is not delivered successfully to the mobile phone 21 in step 111.

In the example of Fig. 5, the mobile communication platform/channel server 36 does not send a delivery report to the Internet communication system 1. After the user has determined that he has not received the one-time password, he uses tablet 11 in step 201 to indicate on the web site that he has not received the one-time password, e.g. by clicking a hyperlink on the login page. Alternatively, the user may be able to indicate this in the application if he is using an application rather than visiting a website.

In step 203, the server 33 transmits a new request to the Internet communication system 1 to create a one-time password and deliver this password to the specified mobile phone number, which is the same as the one specified in step 107. In step 205, the Internet communication system 1 registers in the afore-mentioned database that the communication channel used in step 111 was used unsuccessfully with the specified mobile phone number. In an alternative embodiment, step 205 is omitted and the Internet communication system 1 only registers which communication channels were used successfully with a certain mobile phone number.

In step 207, the Internet communication system 1 creates a second one-time password and selects the communication channel to be used for delivering the second one-time password to the mobile device which uses the specified mobile phone number. In step 208, the communication channel is selected in the same way as in step 110, except that the communication channel selected in step 208 should be different from the communication channel selected in step 110. Preferably, the newly selected communication channel is associated with/tied to the same mobile phone number. For example, SMS, PSTN and WhatsApp are all associated with/tied to a phone number. It may also be possible to select a communication channel not associated with/tied to the same mobile phone number, e.g. an e-mail address if the e-mail address belongs to the same account as the mobile phone number.

In step 209, the second one-time password created in step 207 is transmitted to the mobile phone 21 via the communication channel/platform selected in step 208. The second one-time password is included in a message that has the specified mobile phone number as destination. This message is transmitted by the Internet communication system 1 to the communication platform/channel server 37, which then forwards it to the mobile phone 21.

After the second one-time password is displayed on the mobile phone 21, the user enters it on tablet 11 and tablet 11 sends the entered second one-time password to the server 33, e.g. in an HTML POST request or by using the service API on server 33, in step 211. In step 213, the server 33 verifies the second one-time password with the Internet communication system 1. The message transmitted in step 213 comprises the second one-time password entered in step 211 and the mobile phone number.

In the example of Fig. 5, the user has entered the correct second one-time password and the Internet communication system 1 confirms to the server 33 in step 215 that the second entered one-time password was correct. In step 119, the server 33 grants access to the protected part of the web site. In step 121, the Internet communication system 1 registers in the afore-mentioned database that the communication channel used in step 209 was used successfully with the specified mobile phone number.

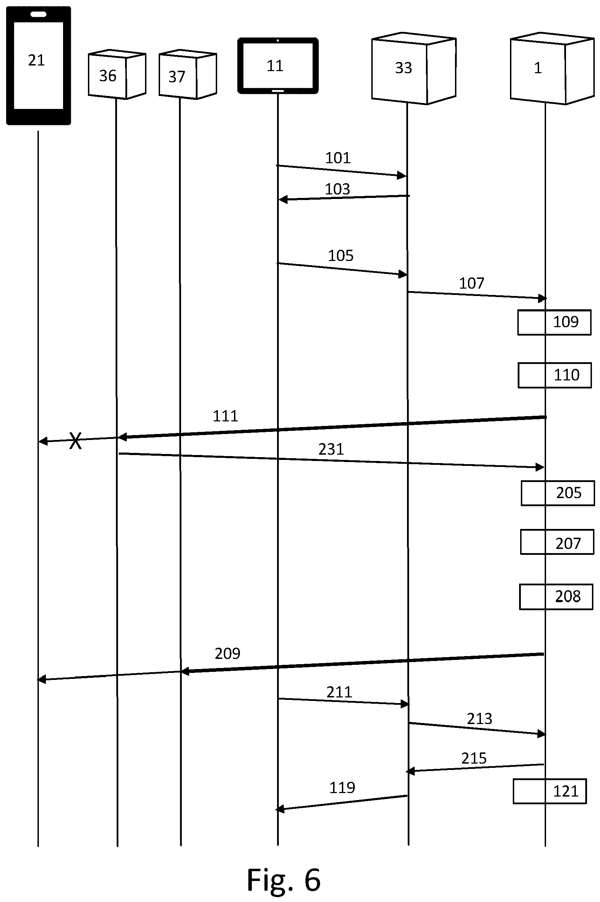

A fifth example of the Internet communication system 1 of Fig. 1 transmitting a one-time password is shown in Fig. 6. The example of Fig. 6 is similar to the fourth example of Fig. 5. However, in the example of Fig. 6, the mobile communication platform/channel server 36 does send a delivery report to the Internet communication system 1. In step 231, the mobile communication platform/channel server 36 transmits a message to the Internet communication system 1 informing the Internet communication system 1 that the message transmitted in step 111 was delivered unsuccessfully or indicates the status of the delivery.

As an example of the latter, in case of a voice call, the mobile communication platform/channel server 36 informs the Internet communication system 1 that the phone is ringing. When the phone is not answered with a certain time, e.g. 5 seconds, the Internet communication system 1 considers delivery to have failed. The time after which the Internet communication system 1 considers delivery to have failed may depend on the specified phone number and may be learned from other times a one-time password is provided via a voice call to the specified mobile phone number.

If delivery is determined to have failed, step 205 is performed immediately and there is no need to wait for the user to indicate on the web site or in the application that he has not received the one-time password, like in the example of Fig. 5. In the example of Fig. 6, steps 201 and 203 of Fig. 5 have therefore been omitted. Since one-time passwords may have a limited Time-To-Live (TTL), e.g. of one to five minutes, step 205 may also be performed automatically without first receiving a delivery report in step 231, when the TTL of the (first) one-time password has expired.

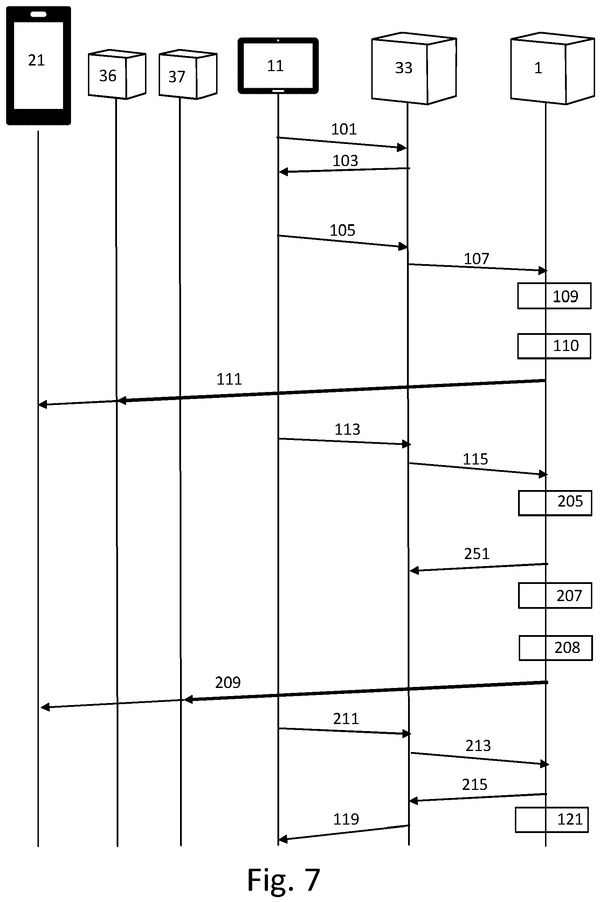

A sixth example of the Internet communication system 1 of Fig. 1 transmitting a one-time password is shown in Fig. 7. The example of Fig. 7 is similar to the fourth example of Fig. 5. However, in the example of Fig. 7, the user does enter a one-time password on the web site or in the application in step 113, but one which is completely wrong. Steps 113 and 115 are performed in the manner described in relation to Fig. 2. Step 205 is performed by the Internet communication system 1 after determining that the entered one-time password is completely wrong. After step 205 has been performed, the Internet communication system 1 transmits, in step 251, a message to the server 33 indicating that an incorrect one-time password was entered. The server 33 then knows to expect another one-time password. After step 251, steps 207 to 215 and steps 119 and 121 are performed in the manner described in relation to Fig. 5.

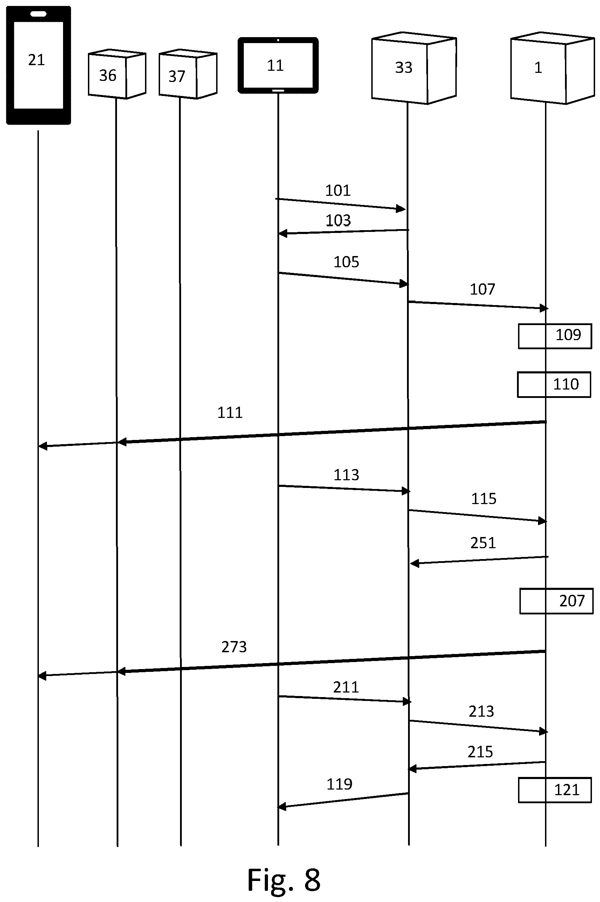

A seventh example of the Internet communication system 1 of Fig. 1 transmitting a one-time password is shown in Fig. 8. The example of Fig. 8 is similar to the example of Fig. 7. However, in the example of Fig. 8, the one-time password entered by the user in step 113 is wrong, but not completely wrong, i.e. it only has a minor typing error. Since the one-time password entered by the user in step 113 is not completely wrong, the same communication channel is used in step 273 to provide the second one-time password to the mobile phone 21 as the one that was used in step 111 to provide the first one-time password.

In the example of Fig. 8, step 208 of Fig. 7 is omitted, because the same communication channel is used in step 173 as in step 111 and channel selection is therefore not necessary.. Furthermore, step 205 of Fig. 7 is omitted from Fig. 8 and as a result, the Internet communication system 1 does not register in the afore-mentioned database that the communication channel used in step 111 was used unsuccessfully with the specified mobile phone number.

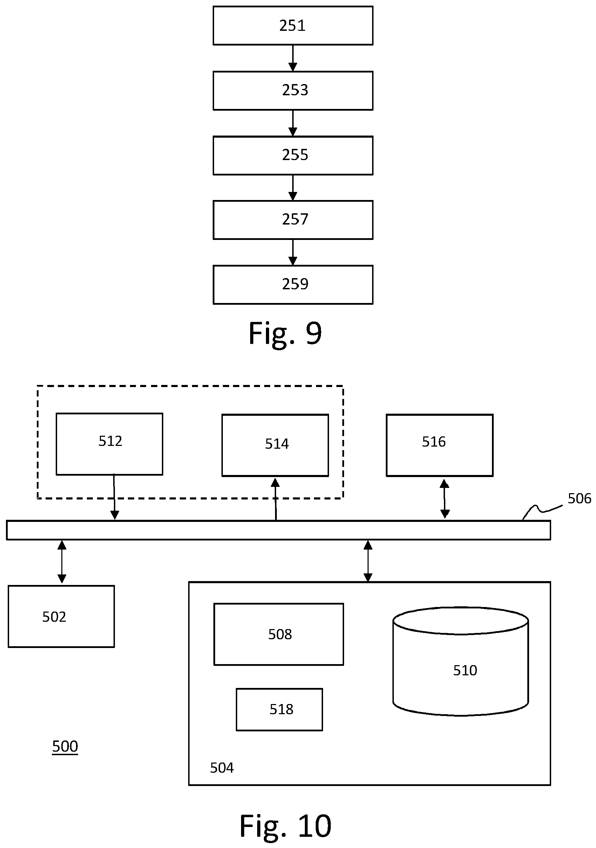

A first embodiment of the method of delivering a one-time password is shown in Fig. 9. A step 251 comprises receiving a request from a further system to deliver message content to a device which is configured to receive calls and/or data addressed to a mobile phone number. A step 253 comprises determining the mobile phone number based on the request.

A step 255 comprises obtaining data associated with the mobile phone number. A step 257 comprises selecting, based on the data, a communication channel for delivering the message content to the device. The communication channel is selected from a plurality of communication channels. A step 259 comprises transmitting a message comprising the message content to the device over the selected communication channel.

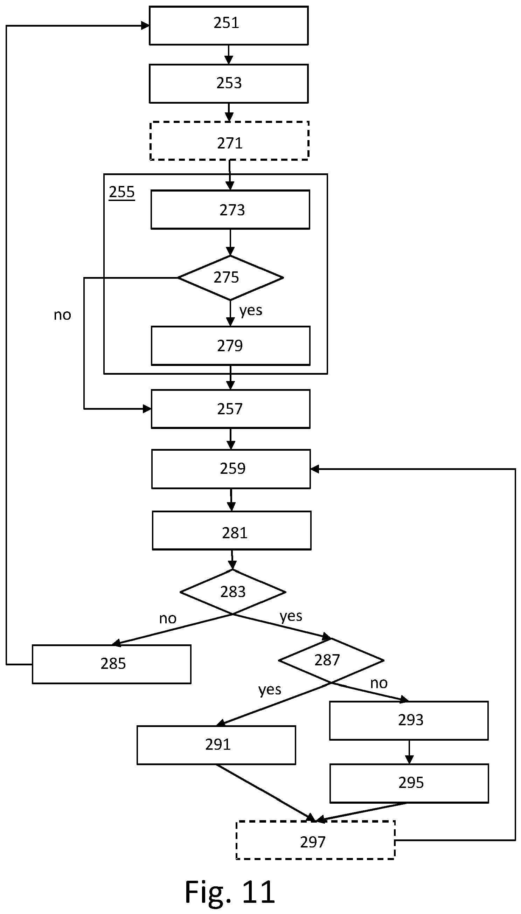

Fig. 10 depicts a block diagram illustrating an exemplary data processing system that may perform the methods and flows as described with reference to Figs. 9 and 11.

As shown in Fig. 10, the data processing system 500 may include at least one processor 502 coupled to memory elements 504 through a system bus 506. As such, the data processing system may store program code within memory elements 504. Further, the processor 502 may execute the program code accessed from the memory elements 504 via a system bus 506. In one aspect, the data processing system may be implemented as a computer that is suitable for storing and/or executing program code. It should be appreciated, however, that the data processing system 500 may be implemented in the form of any system including a processor and a memory that is capable of performing the functions described within this specification.

The memory elements 504 may include one or more physical memory devices such as, for example, local memory 508 and one or more bulk storage devices 510. The local memory may refer to random access memory or other non-persistent memory device(s) generally used during actual execution of the program code. A bulk storage device may be implemented as a hard drive or other persistent data storage device. The processing system 500 may also include one or more cache memories (not shown) that provide temporary storage of at least some program code in order to reduce the quantity of times program code must be retrieved from the bulk storage device 510 during execution. The processing system 500 may also be able to use memory elements of another processing system, e.g. if the processing system 500 is part of a cloud-computing platform.

Input/output (I/O) devices depicted as an input device 512 and an output device 514 optionally can be coupled to the data processing system. Examples of input devices may include, but are not limited to, a keyboard, a pointing device such as a mouse, a microphone (e.g. for voice and/or speech recognition), or the like. Examples of output devices may include, but are not limited to, a monitor or a display, speakers, or the like. Input and/or output devices may be coupled to the data processing system either directly or through intervening I/O controllers.

In an embodiment, the input and the output devices may be implemented as a combined input/output device (illustrated in Fig. 10 with a dashed line surrounding the input device 512 and the output device 514). An example of such a combined device is a touch sensitive display, also sometimes referred to as a "touch screen display" or simply "touch screen". In such an embodiment, input to the device may be provided by a movement of a physical object, such as e.g. a stylus or a finger of a user, on or near the touch screen display.

A network adapter 516 may also be coupled to the data processing system to enable it to become coupled to other systems, computer systems, remote network devices, and/or remote storage devices through intervening private or public networks. The network adapter may comprise a data receiver for receiving data that is transmitted by said systems, devices and/or networks to the data processing system 500, and a data transmitter for transmitting data from the data processing system 500 to said systems, devices and/or networks. Modems, cable modems, and Ethernet cards are examples of different types of network adapter that may be used with the data processing system 500.

As pictured in Fig. 10, the memory elements 504 may store an application 518. In various embodiments, the application 518 may be stored in the local memory 508, the one or more bulk storage devices 510, or separate from the local memory and the bulk storage devices. It should be appreciated that the data processing system 500 may further execute an operating system (not shown in Fig. 10) that can facilitate execution of the application 518. The application 518, being implemented in the form of executable program code, can be executed by the data processing system 500, e.g., by the processor 502. Responsive to executing the application, the data processing system 500 may be configured to perform one or more operations or method steps described herein.

Fig. 10 shows the input device 512 and the output device 514 as being separate from the network adapter 516. However, additionally or alternatively, input may be received via the network adapter 516 and output be transmitted via the network adapter 516. For example, the data processing system 500 may be a cloud server. In this case, the input may be received from and the output may be transmitted to a user device that acts as a terminal.

A second embodiment of the method of transmitting a message is shown in Fig. 11. In the embodiment of Fig. 11, the message comprises a one-time password. Step 251 comprises receiving a request from a further system to deliver a one-time password to a device which is configured to receive calls and/or data addressed to a mobile phone number. The request specifies the mobile phone number. Step 253 comprises determining the mobile phone number based on the request. An optional step 271 comprises creating a one-time password. Alternatively, the one-time password may be created by the further system and included in the request.

Step 255 comprises obtaining data associated with the mobile phone number. In the embodiment of Fig. 11, step 255 comprises sub steps 273, 275 and 279. Step 273 comprises obtaining data related to the plurality of communication channels that are available for the mobile phone number, i.e. related to the communication channels in general. Step 273 may comprise determining a country associated with the mobile phone number and determining a penetration of the plurality of communication channels in this country.

Step 275 comprises checking whether data describing results of previous transmissions of messages to the device, and/or to another device which was configured to receive calls and/or data addressed to a mobile phone number, are available. If so, step 279 is performed. If not, step 279 is skipped. Step 279 comprises obtaining this data from a memory. Step 257 comprises selecting, based on the data obtained in step 273 and optionally in step 279, a communication channel for delivering the one-time password to the device. The communication channel is selected from a plurality of communication channels. In step 257, the communication channel may be selected based on one or more of the inputs described in relation to Fig. 2.

Next, step 259 comprises transmitting the one-time password to the device over the communication channel selected in step 257. Step 259 may comprise receiving a delivery report from a server associated with the selected communication channel. If the one-time password is transmitted via a phone call in step 259, step 259 may further comprise determining whether the user answered the phone call within a predetermined period. The predetermined period associated with the mobile phone number may initially be set to a longer period of time and decreased if it is detected that the user answers phone calls (much) quicker.

Next, a step 281 comprises receiving data from the further system in relation to the mobile phone number, if any such data was transmitted by the further system. The data may, for example, comprise a password provided by the user, a confirmation indicating that the user has provided a password that matches the transmitted one-time password, information indicating that the user has provided a password that does not match the transmitted one-time password, or information indicating that the user has not received the transmitted one-time password.

If the data received from the further system comprises a password provided by the user, the provided password is compared with the transmitted one-time password. The further system is informed of the result of the comparison, i.e. whether the two codes match. These steps are not shown in Fig. 11. If no data is received from the further system in step 281 before a timeout counter lapses, the transmission may be determined to be unsuccessful. If a delivery report received in step 255 indicates that the message could not be delivered, step 283 may be performed before the timeout counter lapses.

Step 283 comprises determining whether the transmission was successful or not. The transmission may be determined to be successful when:
- the one-time password is transmitted via a phone call and the phone call is answered;
- a delivery report that is received from a server associated with the selected communication channel indicates that the transmission/delivery was successful;
- a password provided by the user matches the transmitted one-time password;
- a confirmation indicating that a provided password matches the transmitted one-time password has been received from the further system.

The transmission may be determined to be unsuccessful when:
- the one-time password is transmitted via a phone call and the phone call is not answered within a predetermined period;
- a delivery report that is received from a server associated with the selected communication channel indicates that the transmission/delivery was unsuccessful;
- a password provided by the user does match the transmitted on-time password;
- information informing the system that a user has indicated that he has not received the transmitted one-time password has been received from the further system.

A step 285 is performed if it is determined in step 283 that the transmission was successful. Step 285 comprises registering in the memory as part of the data that the transmission was successful. Step 251 is repeated after step 285 and the method proceeds as shown in Fig. 11. A step 287 is performed if it is determined in step 283 that the transmission was unsuccessful. Step 287 comprises checking whether a password was provided by the user and a difference between this provided password and said transmitted one-time password does not exceed a threshold, e.g. a minor typing error was made. If not, a step 293 is performed next.

Step 293 comprises registering in the memory as part of the data that the transmission was unsuccessful. Next, a step 295 comprises selecting, based on the data obtained in step 273 and optionally in step 279, a further communication channel for delivering a further one-time password to the device. The further communication channel is selected from the plurality of communication channels and is different from the communication channel selected in step 257 and used in step 259.

If it is determined in step 287 that a difference between the provided password and the transmitted one-time password does not exceed the threshold, a step 291 is performed next. Step 291 comprises selecting the same communication channel again, i.e. selecting the communication channel selected in step 257 and used in step 259. An optional step 297 comprises creating a further one-time password. Alternatively, the further one-time password may be created by the further system and may be included in the data received from the further system in step 281. Next, the further one-time password is transmitted in step 259 over the communication channel selected in step 291 or 295, and the method proceeds as shown in Fig. 11.

Various embodiments of the invention may be implemented as a program product for use with a computer system, where the program(s) of the program product define functions of the embodiments (including the methods described herein). In one embodiment, the program(s) can be contained on a variety of non-transitory computer-readable storage media, where, as used herein, the expression "non-transitory computer readable storage media" comprises all computer-readable media, with the sole exception being a transitory, propagating signal. In another embodiment, the program(s) can be contained on a variety of transitory computer-readable storage media. Illustrative computer-readable storage media include, but are not limited to: (i) non-writable storage media (e.g., read-only memory devices within a computer such as CD-ROM disks readable by a CD-ROM drive, ROM chips or any type of solid-state non-volatile semiconductor memory) on which information is permanently stored; and (ii) writable storage media (e.g., flash memory, floppy disks within a diskette drive or hard-disk drive or any type of solid-state random-access semiconductor memory) on which alterable information is stored. The computer program may be run on the processor 302 described herein.

The terminology used herein is for the purpose of describing particular embodiments only and is not intended to be limiting of the invention. As used herein, the singular forms "a," "an," and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

The corresponding structures, materials, acts, and equivalents of all means or step plus function elements in the claims below are intended to include any structure, material, or act for performing the function in combination with other claimed elements as specifically claimed. The description of embodiments of the present invention has been presented for purposes of illustration, but is not intended to be exhaustive or limited to the implementations in the form disclosed. Many modifications and variations will be apparent to those of ordinary skill in the art without departing from the scope and spirit of the present invention. The embodiments were chosen and described in order to best explain the principles and some practical applications of the present invention, and to enable others of ordinary skill in the art to understand the present invention for various embodiments with various modifications as are suited to the particular use contemplated.

## Claims

1. A system (1) for transmitting a message, said system (1) comprising:
at least one input interface (3);
at least one output interface (4); and
at least one processor (5) configured to:
- receive, via said at least one input interface (3), a request from a further system (23,33,34) to deliver message content to a device (21) which is configured to receive calls and/or data addressed to a mobile phone number,
- determine said mobile phone number based on said request,
- obtain data associated with said mobile phone number,
- select, based on said data, a communication channel for delivering said message content to said device (21), said communication channel being selected from a plurality of communication channels and
- transmit a message comprising said message content to said device (21) over said selected communication channel via said at least one output interface (4).

2. A system (1) as claimed in claim 1, wherein said at least one processor (5) is configured to:
- determine whether said transmission of said message to said device (21) over said selected communication channel was unsuccessful, and
- select, based on said data associated with said mobile phone number, in dependence on said transmission being unsuccessful, a further communication channel for delivering said message content or further message content to said device (21), said further communication channel being selected from said plurality of communication channels and being different from said communication channel, and
- transmit said message content or said further message content to said device (21) over said selected further communication channel via said at least one output interface (4) in dependence on said transmission being unsuccessful.

3. A system as claimed in claim 1 or 2, wherein said data describes results of previous transmissions of messages to said device (21) and/or to another device which was configured to receive calls and/or data addressed to said mobile phone number.

4. A system (1) as claimed in claim 3, wherein said at least one processor (5) is configured to:
- determine whether said transmission of said message to said device (21) over said selected communication channel was successful, and
- register in a memory (7) as part of said data that said transmission was successful upon determining that said transmission was successful.

5. A system (1) as claimed in claim 4, wherein said transmitted message content comprises a transmitted one-time password and said at least one processor (5) is configured to:
- receive, via said at least one input interface (3), a user-provided password from said further system (23,33,34),
- determine whether said user-provided password matches said transmitted one-time password, and
- upon determining that said user-provided password matches said transmitted one-time password, register in said memory (7) as part of said data that said transmission was successful and inform said further system (23,33,34) and/or another system (33,34) that said user-provided password matches said transmitted one-time password.

6. A system (1) as claimed in claim 4 or 5, wherein said transmitted message content comprises a transmitted one-time password and said at least one processor (5) is configured to:
- receive, via said at least one input interface (3), a confirmation from said further system (33,34), said confirmation indicating that a user-provided password matches said transmitted one-time password, and
- register in said memory (7) as part of said data that said transmission was successful upon receiving said confirmation.

7. A system (1) as claimed in claim 3, wherein said at least one processor (5) is configured to:
- determine whether said transmission of said message to said device (21) over said selected communication channel was unsuccessful, and
- register in a memory (7) as part of said data that said transmission was unsuccessful upon determining that said transmission was unsuccessful.

8. A system (1) as claimed in claim 7, wherein said at least one processor (5) is configured to transmit said message via a phone call and determine that said transmission was unsuccessful upon determining that said phone call was not answered within a predetermined period.

9. A system (1) as claimed in claim 7 or 8, wherein said at least one processor (5) is configured to receive, via said at least one input interface (3), a delivery report related to said message from a server (36) associated with said selected communication channel and determine whether said transmission was unsuccessful based on said delivery report.

10. A system (1) as claimed in any one of claims 7 to 9, wherein said transmitted message content comprises a transmitted one-time password and said at least one processor (5) is configured to register in said memory (7) as part of said data that said transmission was unsuccessful upon determining that a difference between a user-provided password and said transmitted one-time password exceeds a threshold.

11. A system (1) as claimed in any one of claims 7 to 10, wherein said transmitted message content comprises a transmitted one-time password and said at least one processor (5) is configured to:
- receive, via said at least one input interface (3), information from said further system (33,34) which informs said system (1) that a user has provided a password which does not match said transmitted one-time password or has indicated not having received said transmitted one-time password, and
- register in said memory (7) as part of said data that said transmission was unsuccessful upon receiving said information.

12. A system (1) as claimed in any one of the preceding claims, wherein said at least one processor (5) is configured to:
- determine a country associated with said mobile phone number,
- select said communication channel or another communication channel for delivering said message content to said device (21) based on a penetration of said plurality of communication channels in said country, and
- transmit said message comprising said message content to said device (21) over said selected communication channel or over said another communication channel via said at least one output interface (4).

13. A method of transmitting a message, said method comprising:
- receiving (251) a request from a further system to deliver message content to a device which is configured to receive calls and/or data addressed to a mobile phone number;
- determining (253) said mobile phone number based on said request;
- obtaining (255) data associated with said mobile phone number;
- selecting (257), based on said data, a communication channel for delivering said message content to said device, said communication channel being selected from a plurality of communication channels; and
- transmitting (259) a message comprising said message content to said device over said selected communication channel.

14. A computer program or suite of computer programs comprising at least one software code portion or a computer program product storing at least one software code portion, the software code portion, when run on a computer system, being configured for performing the method of claim 13.
